# EUROPEAN PATENT APPLICATION

(11) **EP 4 572 506 A1**
(43) Date of publication of application: **18.06.2025**
(21) Application number: 23851989.6
(22) Date of filing: 11.08.2023
(51) Int. Cl.: H04W 74/08

(54) **INFORMATION TRANSMISSION METHOD AND APPARATUS, TERMINAL AND MEDIUM**

(30) Priority: 12.08.2022 CN 202210969137
(71) Applicant: Vivo Mobile Communication Co., Ltd., Dongguan, Guangdong 523863 (CN)
(72) Inventor: YANG, Yuming, Dongguan, Guangdong 523863 (CN); JI, Zichao, Dongguan, Guangdong 523863 (CN)
(74) Representative: Murgitroyd & Company
(86) International application number: PCT/CN2023/112559
(87) International publication number: WO 2024/032769

(57) **Abstract**

This application pertains to the field of communication technologies, and discloses an information transmission method and apparatus, a terminal, and a medium. The information transmission method in embodiments of this application includes: performing, by a first terminal, channel access on first channels in a first channel set; and transmitting, by the first terminal, a target object on a second channel in a second channel set, where the second channel set is a set of channels on which channel access is successful among the first channels.

## Description

### CROSS-REFERENCE TO RELATED APPLICATION

This application claims priority to Chinese Patent Application No. 202210969137.2, filed with the China National Intellectual Property Administration on August 12, 2022 and entitled "INFORMATION TRANSMISSION METHOD AND APPARATUS, TERMINAL, AND MEDIUM", which is incorporated herein by reference in its entirety.

### TECHNICAL FIELD

This application pertains to the field of communication technologies, and specifically, relates to an information transmission method and apparatus, a terminal, and a medium.

### BACKGROUND

Currently, in an unlicensed band, if a terminal needs to transmit information, the terminal may first perform a channel access procedure on a channel, and then transmit the information through the channel. Specifically, the terminal may first perform listen before talk (Listen Before Talk, LBT) on the channel to determine whether the channel is idle, and then access the channel in a case that the channel is determined to be idle, to perform the channel access procedure on the channel.

However, due to a possibility that the terminal needs to transmit a data packet with a large amount of information, the terminal may need to first perform the channel access procedure on a plurality of channels. In the related art, there is no explicit specification on how the terminal should perform the channel access procedure on the plurality of channels. In addition, when the terminal performs the channel access procedure on the plurality of channels, access to some channels may fail. In this case, how to handle the failure is a problem that needs to be resolved.

### SUMMARY

Embodiments of this application provide an information transmission method and apparatus, a terminal, and a medium to resolve a problem that an information transmission capability is poor.

According to a first aspect, an information transmission method is provided and applied to a first terminal. The method includes: performing, by the first terminal, channel access on first channels in a first channel set; and transmitting, by the first terminal, a target object on a second channel in a second channel set, where the second channel set is a set of channels on which channel access is successful among the first channels.

According to a second aspect, an information transmission apparatus is provided. The information transmission apparatus is a first information transmission apparatus, and the first information transmission apparatus includes an execution module and a transmission module. The execution module is configured to perform channel access on first channels in a first channel set. The transmission module is configured to transmit a target object on a second channel in a second channel set, where the second channel set is a set of channels on which channel access is successful among the first channels.

According to a third aspect, an information transmission method is provided and applied to a second terminal. The method includes: receiving, by the second terminal, a target object from a first terminal on a second channel in a second channel set, where the second channel set is a set of channels on which channel access is successful among the first channels in a first channel set.

According to a fourth aspect, an information transmission apparatus is provided. The information transmission apparatus is a second information transmission apparatus, and the second information transmission apparatus includes a receiving module. The receiving module is configured to receive a target object from a first information transmission apparatus on a second channel in a second channel set, where the second channel set is a set of channels on which channel access is successful among the first channels in a first channel set.

According to a fifth aspect, a terminal is provided. The terminal includes a processor and a memory. The memory stores a program or instructions capable of running on the processor. When the program or instructions are executed by the processor, the steps of the method according to the first aspect are implemented, or the steps of the method according to the third aspect are implemented.

According to a sixth aspect, a terminal is provided and includes a processor and a communication interface. The processor is configured to perform channel access on first channels in a first channel set. The communication interface is configured to transmit a target object on a second channel in a second channel set, where the second channel set is a set of channels on which channel access is successful among the first channels; or the communication interface is configured to receive a target object from a first terminal on a second channel in a second channel set, where the second channel set is a set of channels on which channel access is successful among the first channels in a first channel set.

According to a seventh aspect, an information transmission system is provided and includes a first terminal and a second terminal. The first terminal may be configured to perform the steps of the method according to the first aspect. The second terminal may be configured to perform the steps of the method according to the third aspect.

According to an eighth aspect, a readable storage medium is provided. The readable storage medium stores a program or instructions. When the program or instructions are executed by a processor, the steps of the method according to the first aspect are implemented, or the steps of the method according to the third aspect are implemented.

According to a ninth aspect, a chip is provided. The chip includes a processor and a communication interface. The communication interface is coupled to the processor. The processor is configured to run a program or instructions to implement the steps of the method according to the first aspect or implement the steps of the method according to the third aspect.

According to a tenth aspect, a computer program or program product is provided. The computer program or program product is stored in a storage medium. The computer program or program product is executed by at least one processor to implement the steps of the method according to the first aspect or implement the steps of the method according to the third aspect.

In the embodiments of this application, the first terminal may perform channel access on the first channels in the first channel set, and transmit the target object on the second channel in the set of channels on which channel access is successful in the first channel set. Because the first terminal can directly perform channel access on the first channels in the first channel set, and transmit the target object on the second channel among the channels on which channel access is successful in the first channel set, a case that the first terminal cannot transmit a data packet with a large amount of information can be avoided, and an information transmission capability can be improved.

### BRIEF DESCRIPTION OF DRAWINGS

FIG. 1 is a block diagram of a wireless communication system according to an embodiment of this application;
FIG. 2 is a first schematic flowchart of an information transmission method according to an embodiment of this application;
FIG. 3 is a second schematic flowchart of an information transmission method according to an embodiment of this application;
FIG. 4 is a third schematic flowchart of an information transmission method according to an embodiment of this application;
FIG. 5 is a fourth schematic flowchart of an information transmission method according to an embodiment of this application;
FIG. 6 is a fifth schematic flowchart of an information transmission method according to an embodiment of this application;
FIG. 7 is a first schematic diagram of a structure of an information transmission apparatus according to an embodiment of this application;
FIG. 8 is a second schematic diagram of a structure of an information transmission apparatus according to an embodiment of this application;
FIG. 9 is a schematic diagram of a structure of a communication device according to an embodiment of this application; and
FIG. 10 is a schematic diagram of a hardware structure of a terminal according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The following describes terms used in the embodiments of this application.

### 1. LBT

At present, in an NR system, an unlicensed band (Unlicensed Band) may be used to supplement a licensed band (Licensed Band), to help an operator expand services.

To keep consistency with NR system deployment and maximize NR-based unlicensed access as much as possible, the unlicensed band can work in 5 gigahertz GHz, 37 GHz, and 60 GHz bands.

A large bandwidth (80 or 100 megahertz MHz) of the unlicensed band can reduce implementation complexity of a base station and user equipment (User Equipment, UE). Because the unlicensed band is shared by a plurality of technologies, in some countries or regions, use of the unlicensed band needs to comply with regulations (regulation), such as LBT, a maximum channel occupancy time (Maximum Channel Occupancy Time, MCOT), and other regulations, to ensure that all terminals can use the resource. When a transmission node needs to send information, the transmission node needs to perform LBT first and perform energy detection (Energy Detection, ED) on nearby nodes. When detected power is lower than a threshold, a channel is considered as idle (idle) and the transmission node can send the information. Otherwise, the channel is considered as busy, and the transmission node cannot send the information. After the transmission node starts a transmission, a channel occupancy time (Channel Occupancy Time, COT) cannot exceed the MCOT. In addition, in the unlicensed band, the transmission node should occupy at least 70% (60 GHz) or 80% (5 GHz) of the bandwidth of the entire band during each transmission.

The transmission node may be a base station, a terminal, or the like.

Usually, types (type) of LBT commonly used may include type 1, type 2A, type 2B, and type 2C.

Type 1 LBT is a channel listening mechanism based on back-off (back-off). When the transmission node detects that the channel is busy, the transmission node backs off and continues listening until the transmission node detects that the channel is idle.

Type 2C LBT means that a sending node does not perform LBT.

Type 2A LBT and type 2B LBT are one-shot LBT performed by the node before the transmission. If the channel is idle, the node performs the transmission, or if the channel is busy, the node does not perform the transmission. A difference is as follows: Type 2A LBT is LBT performed within 25 microseconds µs and is applicable during sharing of the COT if a gap between two transmissions is greater than or equal to 25 µs. Type 2B LBT is LBT performed within 16 µs and is applicable during sharing of the COT if a gap between two transmissions is equal to 16 µs.

### 2. Wideband (wideband) channel access in new radio unlicensed (New Radio Unlicensed, NR-U)

Currently, wideband channel access in the NR-U is classified into downlink (Down Link, DL) channel access and uplink (Up Link, UL) channel access.

The DL channel access includes two types of mechanisms: type A and type B.

In the type A mechanism, a base station performs type 1 DL channel access on each channel (channel). In addition, if the base station is not configured with a guard band (guard band) in this band, and once the base station fails to access any channel, the base station cannot perform a transmission on the channel. A guard band configuration includes start physical resource blocks (Physical Resource Block, PRB) of a-1 guard bands and a PRB size (size) indication, where a is a quantity of RB sets. Therefore, a quantity of guard bands in this band is a-1, where a is a positive integer.

In the type B mechanism, the base station selects a primary channel (primary channel) among wideband channels to perform type 1 DL channel access, while only one-shot type 2 DL channel access may be performed on other secondary channels (secondary channel).

### 3. Wideband

Generally, the wideband is defined relative to a channel access unit in the unlicensed band, and the channel access unit in the unlicensed band is a 20 megahertz MHz channel (that is, an RB set). Therefore, when a terminal selects a plurality of channels for channel access, that is, performs a wideband transmission, a part of information to be transmitted is transmitted on each channel. In this case, the wideband is not necessarily continuous in frequency domain, that is, the wideband selected by the terminal may be composed of channels that are continuous in frequency domain or channels that are discontinuous in frequency domain.

### 4. Channel occupancy time (Channel Occupancy Time, COT)

Generally, a network-side device (such as the base station) may initiate channel occupancy (Channel Occupancy, CO) based on downlink (Down Link, DL) channel access of the base station or uplink (Up Link, UL) channel access of the terminal, so that the base station (or terminal) can determine a maximum COT of the channel access based on a channel access priority class (Channel Access Priority Class, CAPC). Further, the base station (or terminal) may occupy the channel for transmitting information within the maximum COT.

### 5. Shared COT

Generally, the shared COT may include the following different types of shared COTs:
(A) Shared COT in a downlink direction: After the base station accesses the channel in type (Type) 1 channel access mode to obtain CO, the base station may instruct the terminal to share this COT with the base station, that is, the terminal may also transmit information on this channel within the COT.
(B) Shared COT in an uplink direction: After the terminal accesses the channel in type 1 channel access mode to obtain CO, the terminal may instruct the base station to share this COT with the terminal, that is, the base station may also transmit information on this channel within the COT.

The shared COT in the uplink direction may include a shared COT in an uplink direction in new radio unlicensed (New Radio Unlicensed, NR-U). In the shared COT in the uplink direction in the NR-U, the terminal may send COT sharing information to the base station, where the COT sharing information carries the following information fields: an offset (indicating a time-domain offset between a start position of the shared COT and a position in which the COT sharing information is located), a duration (duration) (indicating a duration of sharing the COT), and a CAPC (indicating a channel access priority class), so that the base station can share this COT with the terminal.

### 6. Multi-channel access (multi-channel access)

Generally, multi-channel access may also be referred to as wideband channel access. The wideband channel access may be classified into DL and UL.

The DL includes two types of mechanisms: type A and type B.

In the type A mechanism, the base station performs type 1 DL channel access on each channel. In addition, if the base station is not configured with a guard band (guard band) in this band, and if the base station fails to access any channel, the base station cannot perform a transmission on the channel. Herein, a guard band configuration includes start physical resource blocks (Physical Resource Block, PRB) of N-1 guard bands and a PRB size (size) indication, where N is a quantity of resource block (Resource Block, RB) sets (set). Therefore, a quantity of guard bands in this band is N-1.

In the type B mechanism, the base station selects a primary channel among wideband channels to perform type 1 DL channel access, while only one-shot type 2 DL channel access may be performed on other secondary channels.

### 7. Other terms

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

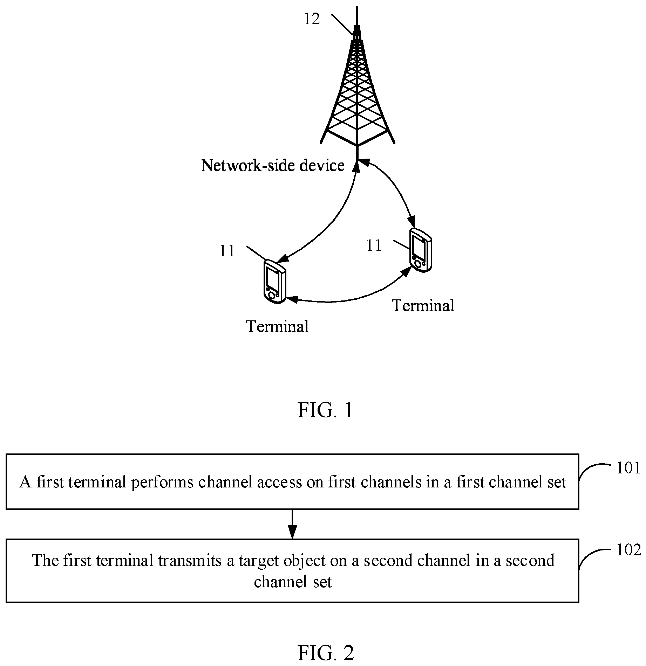

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (VUE), pedestrian user equipment (PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device 12 may also be referred to as a radio access network device, a radio access network (Radio Access Network, RAN), a radio access network function, or a radio access network element. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmitting Receiving Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

An information transmission method and apparatus, a terminal, and a medium provided in the embodiments of this application are hereinafter described in detail by using some embodiments and application scenarios thereof with reference to the accompanying drawings.

FIG. 2 is a flowchart of an information transmission method according to an embodiment of this application. As shown in FIG. 2, the information transmission method provided in this embodiment of this application may include the following step 101 and step 102.

Step 101: A first terminal performs channel access on first channels in a first channel set.

Optionally, in this embodiment of this application, the first terminal may perform channel access on the first channels in the first channel set in a case that the first terminal performs a wideband transmission on a sidelink (SideLink).

Optionally, in this embodiment of this application, the first channel set may be any one of the following: a channel set selected by the first terminal for the transmission, a channel set preconfigured by a network-side device, a channel set configured by the network-side device, a channel set specified by a protocol, all channels in a resource pool, and the like. The first channel set may include one channel set or a plurality of channel sets.

The first channel set may include a plurality of first channels.

Optionally, in this embodiment of this application, the first channel (that is, the channel on which channel access is performed in the first channel set) may be any one of the following: any channel in the first channel set, a channel selected by the first terminal, a channel preconfigured by the network-side device, a channel configured by the network-side device, a channel specified by a protocol, and the like.

It may be understood that the first channel may be one channel or a plurality of channels for channel access. The first channel may be all or part of the channels in the first channel set.

Optionally, in this embodiment of this application, the first terminal performs channel access on the first channel by performing detection on all or part of the channels in the first channel set.

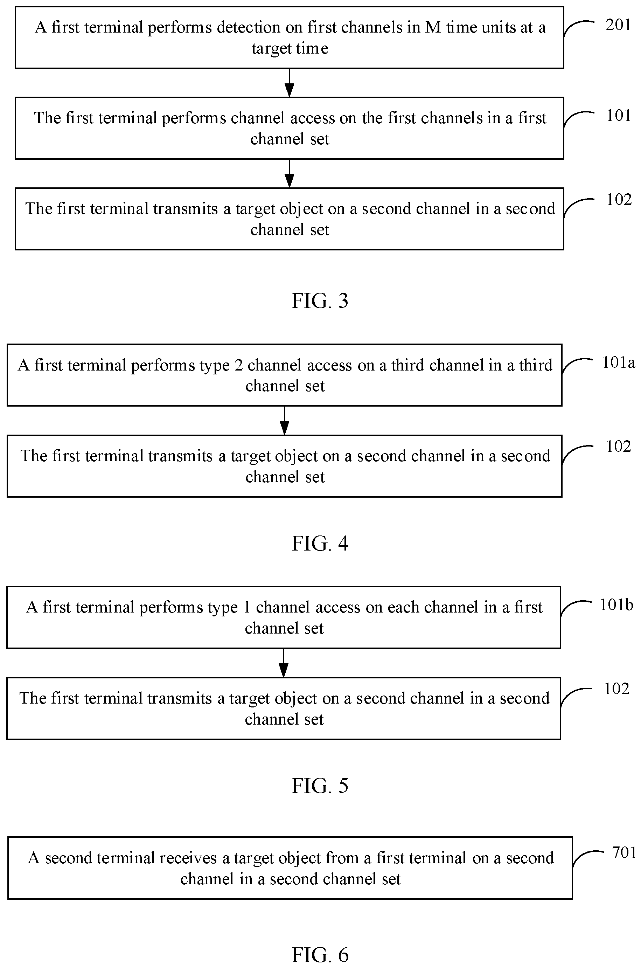

Optionally, in this embodiment of this application, with reference to FIG. 2, as shown in FIG. 3, before the foregoing step 101, the information transmission method provided in this embodiment of this application further includes the following step 201.

Step 201: The first terminal performs detection on the first channels in M time units at a target time.

In this embodiment of this application, the target time includes at least one of the following: an idle time, a time before a transmission start time, and a time before a frame boundary, where M is a positive integer.

For example, when the first terminal is in an unlicensed scenario with frame-based equipment (Frame Based Equipment, FBE), the first terminal needs to perform LBT within an idle time of each frame to determine whether channel access is possible. Because the first terminal needs to perform channel access on a plurality of channels, it is necessary to perform channel access on each first channel in the first channel set, that is, to perform channel detection for M µs within the idle time or immediately before the transmission start time within the idle time, to determine on which first channels channel access can be performed.

Optionally, in this embodiment of this application, the time before the transmission start time may be specifically E time units before the transmission start time of the first channel, where E is a positive integer greater than or equal to M.

Optionally, in this embodiment of this application, the time before the frame boundary may be specifically U time units before the transmission start time of the first channel, where U is a positive integer greater than or equal to M.

Optionally, in this embodiment of this application, each of the M time units may be any one of the following: a symbol, a slot, a mini-slot, a microsecond, a millisecond, and the like.

Optionally, in this embodiment of this application, the first terminal may perform clear channel assessment (Clear channel assessment, CCA) on the first channels in the M time units to perform detection on the first channels.

As can be learned, because the first terminal can perform detection on the first channels in the M time units before performing channel access on the first channels, the first terminal can perform channel access on the first channels based on a result of detection, so that a success rate of channel access can be increased.

Optionally, in this embodiment of this application, start positions of the M time units corresponding to the first channels are the same as start positions of M time units corresponding to other first channels; and/or end positions of the M time units corresponding to the first channels are the same as end positions of M time units corresponding to other first channels.

It may be understood that a start position of each channel (that is, each first channel) in the first channel set may be the same; and/or an end position of each channel (that is, each first channel) in the first channel set may be the same.

For example, the end position corresponding to each channel in the first channel set is at a frame boundary; therefore, a start position for performing channel access on each channel in the M time units is also the same.

Optionally, in this embodiment of this application, start positions of the M time units corresponding to the first channels are different from start positions of M time units corresponding to other first channels; and/or end positions of the M time units corresponding to the first channels are different from end positions of M time units corresponding to other first channels.

Optionally, in this embodiment of this application, a target position meets at least one of the following: it is randomly selected by the first terminal; it is predefined by a protocol; it is preconfigured by the network-side device; and it is configured by the network-side device, where the target position includes at least one of the following: start positions of M time units corresponding to each channel in the first channel set and end positions of the M time units corresponding to each channel in the first channel set.

For example, the start position of each channel in the first channel set is randomly selected within an idle time of a frame or a start position sufficient for performing channel access is selected based on the configuration, or the start position of each channel may be different based on the configuration or selection, so that the time of channel access does not overlap.

Step 102: The first terminal transmits a target object on a second channel in a second channel set.

In this embodiment of this application, the second channel set is a set of channels on which channel access is successful among the first channels.

The second channel set may include a plurality of second channels.

It may be understood that the second channel set may be a subset or a universal set of the first channel set.

It may be understood that the second channel on which the first terminal transmits the target object may be all or part of the channels in the second channel set.

Optionally, in this embodiment of this application, the target object includes at least one of the following: a physical sidelink control channel (Physical Sidelink Control Channel, PSCCH), a physical sidelink shared channel (Physical Sidelink Shared Channel, PSSCH), and a physical sidelink feedback channel (Physical Sidelink Feedback Channel, PSFCH).

Optionally, in this embodiment of this application, in a case that the target object includes the PSCCH, the PSCCH may carry sidelink control information (Sidelink Control Information, SCI); or in a case that the target object includes the PSFCH, the PSFCH may carry hybrid automatic repeat request (Hybrid Automatic Repeat Request, HARQ) feedback information.

Optionally, in this embodiment of this application, after the foregoing step 101, the information transmission method provided in this embodiment of this application may further include at least one of the following step 301, step 302, step 303, and step 304.

Step 301: In a case that the first terminal does not successfully perform LBT on all channels in the first channel set, the first terminal continues to perform CCA.

Optionally, in this embodiment of this application, the first terminal may perform CCA on all the channels in the first channel set. In this way, the first terminal can continue to perform CCA on all the channels in the first channel set in a case of failure to perform LBT on any one of the channels. In other words, in this case, the first terminal performs the transmission only in a case that LBT is successfully performed on all the channels, and once LBT on any channel fails, the first terminal continues to perform CCA, or continues to perform CCA until a specific time for the transmission.

Step 302: The first terminal transmits the target object on the second channel starting from a target time unit.

In this embodiment of this application, the target time unit is a time unit within Y time units after LBT is successfully performed on all the channels in the first channel set, and Y is a positive integer.

Optionally, in this embodiment of this application, each of the Y time units may be any one of the following: a symbol, a slot, a mini-slot, a subframe, a frame, and the like.

Optionally, in this embodiment of this application, the target time unit may be any one of the following: it is randomly selected by the first terminal; it is predefined by a protocol; it is preconfigured by the network-side device; and it is configured by the network-side device.

Optionally, in this embodiment of this application, the foregoing step 302 may be specifically implemented by the following step 302a.

Step 302a: In a case that the first terminal successfully performs LBT before the target time unit, the first terminal transmits the target object on the second channel starting from the target time unit.

Step 303: The first terminal transmits the target object on a candidate resource selected by a media access control (Media Access Control, MAC) layer.

Optionally, in this embodiment of this application, in a case that the first terminal does not successfully perform LBT on all the channels in the first channel set, the first terminal may wait to perform channel access before a next candidate resource selected by the media access control MAC layer. If access is successful on all selected channels in this case, the target object is transmitted.

Optionally, in this embodiment of this application, the foregoing step 303 may be specifically implemented by the following step 303a.

Step 303a: In a case that the first terminal successfully performs LBT before the candidate resource selected by the MAC layer, the first terminal transmits the target object on the candidate resource selected by the MAC layer.

Step 304: In a case that the first terminal successfully performs LBT before a reserved aperiodic transmission resource, the first terminal transmits the target object on the aperiodic transmission resource.

Optionally, in this embodiment of this application, in a case that the first terminal does not successfully perform LBT on all the channels in the first channel set, if the first terminal successfully performs LBT before the reserved aperiodic transmission resource, the first terminal transmits the target object on the aperiodic transmission resource.

According to the information transmission method provided in this embodiment of this application, in this embodiment of this application, the first terminal may perform channel access on the first channels in the first channel set, and transmit the target object on the second channel in the set of channels on which channel access is successful in the first channel set. Because the first terminal can directly perform channel access on the first channels in the first channel set, and transmit the target object on the second channel among the channels on which channel access is successful in the first channel set, a case that the first terminal cannot perform channel access on a plurality of channels can be avoided. Therefore, a case that the first terminal cannot perform a wideband transmission on the plurality of channels can be avoided, and a problem that when the first terminal performs the channel access procedure on the plurality of channels, access to some channels fails can be resolved. Further, a case that the first terminal cannot transmit a data packet with a large amount of information can be avoided. In this way, an information transmission capability can be improved.

By using various examples, the following illustrates how the first terminal performs channel access on the first channel.

Optionally, in a possible implementation of this embodiment of this application, a third channel in a third channel set has a shared channel occupancy time COT, and the first terminal is capable of sharing the COT. Specifically, with reference to FIG. 2, as shown in FIG. 4, the foregoing step 101 may be specifically implemented by the following step 101a.

Step 101a: The first terminal performs type 2 channel access on the third channel in the third channel set.

In this embodiment of this application, the third channel set is a subset or a universal set of the first channel set.

In this embodiment of this application, if the first terminal can determine that the third channel in the third channel set in the first channel set has a shared COT, and the first terminal can use the COT, the first terminal may perform type 2 channel access on the third channel.

It may be understood that the third channel may be all or part of the channels in the third channel set.

Optionally, in this embodiment of this application, the third channel is a channel other than a primary channel in the third channel set.

In this embodiment of this application, because other terminals usually perform channel access on the primary channel preferentially, that is, the primary channel is usually occupied by the other terminals, the first terminal may not perform type 1 channel access on the primary channel to avoid channel access failure.

As can be learned, because the first terminal can perform type 2 channel access on channels other than the primary channel in the third channel set, a probability of channel access failure can be reduced.

Optionally, in another possible implementation of this embodiment of this application, specifically, with reference to FIG. 2, as shown in FIG. 5, the foregoing step 101 may be specifically implemented by the following step 101b.

Step 101b: The first terminal performs type 1 channel access on each channel in the first channel set.

Optionally, in this embodiment of this application, the first channel set is a set of channels on which the first terminal wants to perform transmissions.

Optionally, in this embodiment of this application, the first terminal may separately determine a counter value corresponding to each channel in the first channel set. It may be understood that the counter value corresponding to each channel is determined independently on each channel.

The counter value may be specifically a value of an LBT counter.

Optionally, in this embodiment of this application, the counter value corresponding to each channel in the first channel set is the same.

Optionally, in this embodiment of this application, the counter value corresponding to each channel in the first channel set is different.

Optionally, in this embodiment of this application, the counter value corresponding to each channel in the first channel set is determined by a counter value corresponding to a predetermined channel in the first channel set. The predetermined channel includes at least one of the following: a channel with a largest contention window size CWp value, a channel with a smallest CWp value, and a specific channel. The specific channel includes at least one of the following: a channel predefined by a protocol, a channel configured by the network-side device, a channel preconfigured by the network-side device, and a channel selected by the first terminal.

Certainly, the first terminal may also separately adjust the CWp value corresponding to each channel in the first channel set, and/or simultaneously adjust the CWp value corresponding to each channel in the first channel set. Details are hereinafter described by using specific examples.

Optionally, in this embodiment of this application, before the foregoing step 101b, the information transmission method provided in this embodiment of this application may further include the following step 401.

Step 401: The first terminal adjusts, based on first information, a CWp value corresponding to a fourth channel.

The fourth channel is at least part of channels in the first channel set; and the first information includes at least one of the following: hybrid automatic repeat request HARQ statistical value information in first i transmissions of the fourth channel and HARQ statistical value information in a j^{th} time unit in the first i transmissions of the fourth channel, and may further include HARQ statistical value information in a time unit in the first i transmissions of the fourth channel, where i and j are both positive integers.

The HARQ statistical value information may include at least one of the following: statistical value information of HARQ-acknowledgement ACK information and statistical value information of HARQ-negative acknowledgement NACK information.

The jth time unit may be any one of the following: a symbol, a slot, a mini-slot, a subframe, a frame, and the like.

Optionally, in this embodiment of this application, the first terminal may increase the CWp value corresponding to the fourth channel or decrease the CWp value corresponding to the fourth channel based on the first information, that is, the statistical information on at least part of channels.

Optionally, in this embodiment of this application, the foregoing step 401 may be specifically implemented by the following step 401a or step 401b.

Step 401a: In a case that a proportion of HARQ-NACK information in the HARQ statistical value information is greater than or equal to a first proportion, the first terminal increases the CWp value corresponding to the fourth channel.

Step 401b: In a case that a proportion of HARQ-ACK information in the HARQ statistical value information is greater than or equal to a second proportion, the first terminal decreases the CWp value corresponding to the fourth channel.

Optionally, in this embodiment of this application, the second proportion and the first proportion may be the same or different.

For example, in the case that the proportion of HARQ-NACK information is greater than or equal to the first proportion (for example, M1%), the first terminal increases the CWp value corresponding to the fourth channel; and in the case that the proportion of HARQ-ACK information is greater than or equal to the second proportion (for example, M2%), the first terminal decreases the CWp value corresponding to the fourth channel.

Optionally, in a possible implementation of this embodiment of this application, the foregoing step 101 may be specifically implemented by at least one of the following step 101c and step 101d.

Step 101c: The first terminal performs type 1 channel access on a primary channel in the first channel set.

Step 101d: The first terminal performs type 2 channel access on a secondary channel in the first channel set.

The secondary channel is a channel other than the primary channel.

Optionally, in this embodiment of this application, the primary channel meets at least one of the following:
it is randomly selected by the first terminal; distribution of primary channels selected by the first terminal is uniform; it is determined by the first terminal based on a channel transmission parameter; and a frequency of selecting the first channel is less than or equal to a specific frequency.

The channel transmission parameter may include at least one of the following: a channel occupancy ratio (Channel occupancy Ratio, CR), a channel busy ratio (Channel Busy Ratio, CBR), HARQ-ACK feedback information, a transmission success rate, a retransmission rate, reference signal received power (Reference Signal Received Power, RSRP), and a received signal strength indicator (Received Signal Strength Indicator, RSSI).

Optionally, in this embodiment of this application, the foregoing step 101d may be specifically implemented by the following step 101d1, and after step 101d1, the information transmission method provided in this embodiment of this application may further include the following step 101d2.

Step 101d1: The first terminal performs detection on the secondary channel in X time units.

In this embodiment of this application, X is a positive integer.

Optionally, in this embodiment of this application, the X time units may be specifically 25 microseconds µs or a multiple of 25 µs or at least 25 µs.

Step 101d2: In a case that a result of detection by the first terminal on the secondary channel in X time units is a specific result, the first terminal transmits the target object on the secondary channel.

Optionally, in this embodiment of this application, the specific result may be null.

It may be understood that in a case that the result of detection by the first terminal on the secondary channel in the X time units is null, the first terminal may immediately transmit the target object on the secondary channel.

In one example, the CWp value corresponding to each channel in the first channel set is the same. It may be understood that each channel in the first channel set maintains the same CWp value.

In another example, the CWp value corresponding to each channel in the first channel set is different. It may be understood that each channel in the first channel set maintains an independent CWp value.

Certainly, after the first terminal performs channel access on the first channel, there may be a case that access to some channels in the first channel set fails. The following illustrates how the first terminal transmits the target object in this case.

Optionally, in this embodiment of this application, the foregoing step 102 may be specifically implemented by at least one of the following step 102a, step 102b, step 102c, and step 102d.

Step 102a: The first terminal transmits first content on the second channel within first T time units from execution of the transmission.

In this embodiment of this application, the first content is at least part of information carried by the target object, and T is a positive integer.

It may be understood that the first terminal can transmit, within the first T time units from execution of the transmission, the first content on a channel on which channel access is successful.

Optionally, in this embodiment of this application, each of the T time units may be any one of the following: a symbol, a slot, a mini-slot, a subframe, a frame, and the like.

Optionally, in this embodiment of this application, in a case that the second channel includes a plurality of channels, the first terminal may separately transmit part of the first content on each channel of the second channel, to transmit the first content on the second channel.

Optionally, in this embodiment of this application, the first content includes sidelink control information (Sidelink Control Information, SCI). The SCI indicates at least one of the following: the first channel set and the first channel.

In this way, a receive-end device (for example, a second terminal in the following embodiment) may determine, based on a channel indication of the SCI, whether the content sent within the first T time units from execution of the transmission by the first terminal is complete content, and/or whether it is necessary to receive the content sent within the first T time units from execution of the transmission by the first terminal, and/or whether at least one time unit after the first T time units from execution of the transmission by the first terminal continues to be occupied by the first terminal.

For example, when the SCI sent by the first terminal indicates first channel 1 and first channel 2, the receive end obtains, through decoding, only SCI and/or a PSSCH sent by the first terminal on first channel 1. The receive end may determine that the first terminal has not sent the originally intended content on first channel 2 due to access failure on first channel 2 or other reasons in this case. Therefore, the receive end can determine that the content sent by the first terminal in a first slot is incomplete. The terminal may choose not to continue to receive the content sent by the first terminal within the remaining time of the first slot, and may determine that the first terminal will continue to send content in a next slot to send the complete data packet. Therefore, the receive end will perform reception again in the next slot.

Optionally, in this embodiment of this application, the first content includes SCI, the SCI carries a first indication, and the first indication is used to indicate at least one of the following: the first content is punctured; the first terminal sends the rate-matched target object within Q time units after the first T time units; and a terminal identity of the first terminal, where Q is a positive integer.

The terminal identity of the first terminal may be specifically an identity (Identity, ID) of the first terminal.

In this way, the receive-end device (for example, the second terminal in the following embodiment) can determine, based on the SCI, whether the first content is punctured, and/or whether to continue to perform reception within at least one time unit after the first T time units from execution of the transmission by the first terminal.

Optionally, in this embodiment of this application, before the foregoing step 102a, the information transmission method provided in this embodiment of this application may further include at least one of the following step 601 and step 602.

Step 601: The first terminal skips sending the first content on a fifth channel.

In this embodiment of this application, the fifth channel is a channel on which channel access fails in the first channel set.

It may be understood that the first terminal skips sending the first content on the channel on which channel access fails.

Step 602: The first terminal determines, based on a result of LBT performed by the first terminal, whether to perform a first operation on the target object within the first T time units.

In this embodiment of this application, the first operation includes at least one of recoding and re-packetizing.

For example, when the first terminal performs channel access on a plurality of channels (that is, the first channels), due to restrictions of rules, the first terminal needs to perform CCA access for approximately 25 µs in a time period before the transmission. If the access succeeds, the transmission is performed immediately; or if the access fails, the transmission cannot be performed. If the access fails, the first terminal is unable to completely transmit a transport block (Transport Block, TB) originally prepared for sending on the first channel. A simplest solution is that once access to any channel in the first channel set fails, the first terminal does not send on the current resource but waits for a next retransmission resource. However, a disadvantage of this solution is that due to uncertainty of channel conditions, a probability of simultaneous success of access to the plurality of channels (that is, the first channels) is greatly reduced as compared with a probability of success of access to one channel. If the first terminal requires successful channel access on all channels before sending, a long TB latency or even a packet loss is caused, which greatly affects communication reliability. Therefore, another solution is that the first terminal sends, according to an original plan, a prepared TB on a channel on which channel access is successful (that is, the second channel). However, the TB sent in this case is incomplete. Therefore, the first terminal needs to recode the TB or the target object based on a result of LBT on each channel in the first channel set.

As specified in the existing R16/R17 protocol, when the first terminal performs sending, a first time unit (for example, a symbol) is used to assist the receive end in performing automatic gain control (Automatic Gain Control, AGC), and the receive end does not actually decode the symbol. Therefore, assuming that the first terminal has a strong capability to complete the recoding and other processing within one symbol, the first terminal can send the recoded target object on the channel on which channel access is successful starting from a second symbol, so that the receive-end terminal can decode a PSSCH based on SCI on the second symbol, that is, reception by the receive-end terminal is not affected. However, because a duration of a symbol is very short, the first terminal may be unable to process the symbol in time. Therefore, based on variations of the processing time, the following solutions are roughly possible.

First, when the processing time is within one time unit (for example, a slot), the first terminal may first send, on a channel on which LBT is successful within the first slot, the target object that originally needs to be sent, also perform recoding based on a result of LBT within this time, and then send a complete TB in a next slot. The receive-end terminal determines, based on an SCI indication in the first slot and actually received first content, whether the TB in this slot is complete. If the TB is incomplete, the receive-end terminal continues to perform reception in the next slot.

Second, when the processing time is longer than one slot, for example, is three slots, the first terminal may repeatedly send the incomplete TB in the three slots, or may send the incomplete TB only in the first slot, and send padding TBs in other slots to prevent the channel from being occupied by other terminals. To improve spectrum utilization, the first terminal may share second and third slots with other terminals, and then send, in a fourth slot, the TB recoded based on a result of LBT.

Step 102b: The first terminal transmits second content on the second channel starting from a (T+1)th time unit from execution of the transmission.

In this embodiment of this application, the second content is at least part of the information carried by the target object.

It may be understood that the first terminal can transmit the second content on the second channel starting from a start time of the (T+1)th time unit from execution of the transmission.

For example, because the first terminal recodes and/or re-packetizes the target object within the first T time units, the first terminal can send the complete target object starting from the (T+1)th time unit for the receive end to receive.

Optionally, in this embodiment of this application, the second content includes SCI. The SCI indicates at least one of the following: the second channel set, the second channel, a new data indicator (New Data Indicator, NDI), and a redundancy version.

The NDI may be specifically an NDI corresponding to the second channel. The NDI may also be the same as an NDI indicated by the SCI sent in the first T time units, because the previously sent target object is incomplete and cannot be counted as a transmission. The redundancy version may be specifically a redundancy version corresponding to the second channel.

For example, the SCI sent by the first terminal in this case is SCI recoded and/or re-indicated based on a result of LBT, that is, a channel set indicated by the SCI in this case is the second channel set, which is a set composed of all channels on which channel access is successful.

Optionally, in this embodiment of this application, the SCI may also indicate a guard band participating in the transmission.

Step 102c: The first terminal transmits third content on the second channel within first R time units from execution of the transmission.

In this embodiment of this application, the third content is at least part of the information carried by the target object, and R is a positive integer.

Optionally, in this embodiment of this application, the foregoing step 102c may be specifically implemented by at least one of the following step 102c1 and step 102c2.

Step 102c1: The first terminal transmits the third content on the second channel within a pth time unit of the first R time units.

In this embodiment of this application, p is a positive integer.

Optionally, in this embodiment of this application, the first terminal may share other time units (that is, time units other than the p^{th} time unit) within the first R time units from execution of the transmission with other terminals, to maximize the spectrum utilization.

Optionally, in this embodiment of this application, the third content includes at least one of the following: SCI and a second transmission unit. The SCI indicates at least one of the following: a COT corresponding to the second channel is sharable by other terminals than the first terminal, and a duration of sharing the COT corresponding to the second channel. The duration of sharing the COT corresponding to the second channel includes at least one of the following: a duration predefined by a protocol, a duration preconfigured by the network-side device, a duration configured by the network-side device, and a duration determined by the first terminal.

The second transmission unit may be specifically a padding TB. This padding TB is used to prevent the COT from being occupied by other terminals. Therefore, the padding TB is used to indicate channel occupancy and may be any meaningful or meaningless TB.

For example, when the processing time is longer than one slot, for example, is three slots, the first terminal may repeatedly send the incomplete TB in the three slots, or may send the incomplete TB only in the first slot, and send padding TBs in other slots to prevent the channel from being occupied by other terminals. To improve spectrum utilization, the first terminal may share second and third slots with other terminals, and then send, in a fourth slot, the TB recoded based on a result of LBT. In this case, the SCI sent in the first slot indicates the duration of sharing the COT. The duration may be determined in advance because it is related to the processing time. Therefore, the first terminal can send this indication before channel access. When the receive end determines, based on information such as the SCI and the ID of the first terminal, that the transmit end has successfully accessed all the selected channels, the indication may be ignored. If it is determined that access to some channels fails, the receive end may wait, based on this indication, for a corresponding time to perform reception, and other terminals can also access this shared COT based on this indication to perform transmissions, thereby maximizing the spectrum efficiency.

Optionally, in this embodiment of this application, the receive-end device (for example, the second device in the following embodiment) may determine, based on the SCI, whether the TB sent by the first terminal is complete, and in a case that it is determined that the TB sent by the first terminal is incomplete, the receive-end terminal may perform reception after the duration of sharing the COT corresponding to the second channel.

Optionally, in this embodiment of this application, the receive-end device (for example, the second device in the following embodiment) may determine, based on the SCI, whether the TB sent by the first terminal is complete, and in a case that it is determined that the TB sent by the first terminal is incomplete, the receive-end terminal may perform type 2 channel access on the second channel based on information about sharing the COT corresponding to the second channel.

Step 102c2: The first terminal repeatedly transmits the third content on the second channel within the first R time units.

Step 102d: The first terminal transmits fourth content on the second channel within a kth time unit from execution of the transmission, and transmits fifth content on the second channel within a (k+1)th time unit from execution of the transmission.

In this embodiment of this application, the fourth content is a first transmission unit; the fifth content is an unsent transmission unit in the fourth content; and k is a positive integer.

Optionally, in this embodiment of this application, the fifth content includes SCI. The SCI indicates at least one of the following: the second channel set, the second channel, an NDI, and a redundancy version; the NDI is an NDI corresponding to the fifth content; and the NDI is not flipped relative to an NDI corresponding to the fourth content.

For example, because the first terminal recodes and/or re-packetizes the target object within first k time units, the first terminal can send the complete target object starting from the (k+1)th time unit for the receive end to receive.

FIG. 6 is a flowchart of an information transmission method according to an embodiment of this application. As shown in FIG. 6, the information transmission method provided in this embodiment of this application may include the following step 701.

Step 701: A second terminal receives a target object from a first terminal on a second channel in a second channel set.

In this embodiment of this application, the second channel set is a set of channels on which channel access is successful among the first channels in a first channel set.

It should be noted that for the description of the second channel set and the second channel, reference may be made to detailed descriptions in the foregoing embodiment. Details are not described again herein in this embodiment of this application.

According to the information transmission method provided in this embodiment of this application, the second terminal may receive the target object from the first terminal on the second channel in the second channel set, where the second channel set is the set of channels on which channel access is successful among the first channels in the first channel set. Because the second terminal can directly receive the target object from the first terminal on the second channel in the second channel set, a case that the second terminal cannot perform a wideband transmission through a plurality of channels can be avoided, and a case that the second terminal cannot receive a data packet with a large amount of information can be avoided. In this way, an information transmission capability can be improved.

Optionally, in this embodiment of this application, the foregoing step 701 may be specifically implemented by the following step 701a.

Step 701a: The second terminal receives first content on the second channel.

In this embodiment of this application, the first content is transmitted by the first terminal on the second channel within first T time units from execution of a transmission; the first content is at least part of information carried by the target object; and T is a positive integer.

Optionally, in this embodiment of this application, the first content includes SCI, the SCI carries a first indication, and the first indication is used to indicate at least one of the following:
the first content is punctured;
the first terminal sends the rate-matched target object within Q time units after the first T time units; and
a terminal identity of the first terminal, where
Q is a positive integer.

Optionally, in this embodiment of this application, before the foregoing step 701a, the information transmission method provided in this embodiment of this application may further include at least one of the following step 801, step 802, step 803, and step 804.

Step 801: The second terminal determines, based on the first indication, whether the first content is complete content.

Optionally, in this embodiment of this application, after the foregoing step 801, the information transmission method provided in this embodiment of this application may further include the following step 901.

Step 901: In a case that the second terminal determines that the first content is incomplete content, the second terminal skips feeding back a HARQ-ACK to the first terminal.

Step 802: The second terminal determines, based on the first indication, whether the first content needs to be received.

Step 803: The second terminal determines, based on the first indication, whether the second channel is occupied by the first terminal within the Q time units after the first T time units.

Step 804: The second terminal determines, based on the first indication, to continue to receive the first content within the Q time units after the first T time units.

Optionally, in this embodiment of this application, the foregoing step 701 may be specifically implemented by the following step 701b.

Step 701b: The second terminal receives third content from the first terminal on the second channel.

In this embodiment of this application, the third content is transmitted by the first terminal on the second channel within first R time units from execution of a transmission; the third content is at least part of information carried by the target object; and R is a positive integer.

Optionally, in this embodiment of this application, the third content includes at least one of the following: SCI and a second transmission unit; the SCI indicates at least one of the following: a COT corresponding to the second channel is sharable by other terminals than the first terminal, and a duration of sharing the COT corresponding to the second channel; and the duration of sharing the COT corresponding to the second channel includes at least one of the following: a duration predefined by a protocol, a duration preconfigured by a network-side device, a duration configured by the network-side device, and a duration determined by the first terminal.

Optionally, in this embodiment of this application, before the foregoing step 701b, the information transmission method provided in this embodiment of this application may further include the following step 1001.

Step 1001: In a case that the second terminal determines that the third content is not a complete transmission unit, the second terminal performs a second operation.

In this embodiment of this application, the second operation includes at least one of the following:
receiving the third content after the duration of sharing the COT corresponding to the second channel; and
performing type 2 channel access on the second channel based on information about sharing the COT corresponding to the second channel.

The information transmission method provided in the embodiments of this application may be performed by an information transmission apparatus. An information transmission apparatus provided in the embodiments of this application is described by assuming that the information transmission method in the embodiments of this application is performed by the information transmission apparatus.

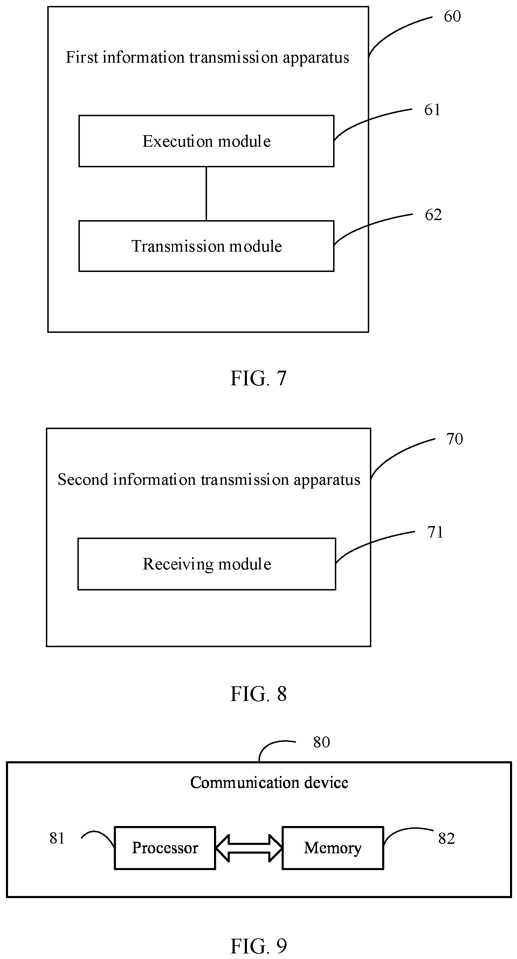

FIG. 7 is a schematic diagram of a possible structure of an information transmission apparatus according to an embodiment of this application. The information transmission apparatus is a first information transmission apparatus. As shown in FIG. 7, the first information transmission apparatus 60 includes an execution module 61 and a transmission module 62.

The execution module 61 is configured to perform channel access on first channels in a first channel set. The transmission module 62 is configured to transmit a target object on a second channel in a second channel set, where the second channel set is a set of channels on which channel access is successful among the first channels.

In a possible implementation, the execution module 61 is specifically configured to perform detection on the first channels in M time units at a target time, where the target time includes at least one of the following: an idle time, a time before a transmission start time, and a time before a frame boundary, where M is a positive integer.

In a possible implementation, start positions of the M time units corresponding to the first channels are the same as start positions of M time units corresponding to other first channels; and/or end positions of the M time units corresponding to the first channels are the same as end positions of M time units corresponding to other first channels.

In a possible implementation, start positions of the M time units corresponding to the first channels are different from start positions of M time units corresponding to other first channels; and/or end positions of the M time units corresponding to the first channels are different from end positions of M time units corresponding to other first channels.

In a possible implementation, a target position meets at least one of the following: it is randomly selected by the first information transmission apparatus 60; it is predefined by a protocol; it is preconfigured by a network-side device; and it is configured by the network-side device, where the target position includes at least one of the following: start positions of M time units corresponding to each channel in the first channel set and end positions of the M time units corresponding to each channel in the first channel set.

In a possible implementation, a third channel in a third channel set has a shared COT, and the first information transmission apparatus 60 is capable of sharing the COT; and the execution module 61 is specifically configured to perform type 2 channel access on the third channel, where the third channel set is a subset or a universal set of the first channel set.

In a possible implementation, the third channel is a channel other than a primary channel in the third channel set.

In a possible implementation, the execution module 61 is specifically configured to perform type 1 channel access on each channel in the first channel set.

In a possible implementation, the first information transmission apparatus 60 provided in this embodiment of this application may further include an adjustment module, where the adjustment module is configured to adjust, based on first information, a CWp value corresponding to a fourth channel, where the fourth channel is at least part of channels in the first channel set; and the first information includes at least one of the following: HARQ statistical value information in first i transmissions of the fourth channel and HARQ statistical value information in a j^{th} time unit in the first i transmissions of the fourth channel, where i and j are both positive integers.

In a possible implementation, the adjustment module is specifically configured to perform at least one of the following: in a case that a proportion of HARQ-NACK information in the HARQ statistical value information is greater than or equal to a first proportion, increasing the CWp value corresponding to the fourth channel; or in a case that a proportion of HARQ-ACK information in the HARQ statistical value information is greater than or equal to a second proportion, decreasing the CWp value corresponding to the fourth channel.

In a possible implementation, a counter value corresponding to each channel in the first channel set is the same.

In a possible implementation, a counter value corresponding to each channel in the first channel set is different.

In a possible implementation, the counter value corresponding to each channel in the first channel set is determined by a counter value corresponding to a predetermined channel in the first channel set; the predetermined channel includes at least one of the following: a channel with a largest CWp value, a channel with a smallest CWp value, and a specific channel; and the specific channel includes at least one of the following: a channel predefined by a protocol, a channel configured by a network-side device, a channel preconfigured by the network-side device, and a channel selected by the first information transmission apparatus 60.

In a possible implementation, the execution module 61 is specifically configured to perform at least one of the following: performing type 1 channel access on a primary channel in the first channel set; and performing type 2 channel access on a secondary channel in the first channel set, where the secondary channel is a channel other than the primary channel.

In a possible implementation, the primary channel meets at least one of the following: it is randomly selected by the first information transmission apparatus 60; distribution of primary channels selected by the first information transmission apparatus 60 is uniform; it is determined by the first information transmission apparatus 60 based on a channel transmission parameter; and a frequency of selecting the first channel is less than or equal to a specific frequency.

In a possible implementation, the execution module 61 is specifically configured to perform detection on the secondary channel in X time units, where X is a positive integer.

In a possible implementation, the execution module 61 is specifically configured to transmit the target object on the secondary channel in a case that a result of detection on the secondary channel in X time units is a specific result.

In a possible implementation, a CWp value corresponding to each channel in the first channel set is the same.

In a possible implementation, the transmission module 62 is specifically configured to perform at least one of the following: transmitting first content on the second channel within first T time units from execution of the transmission; transmitting second content on the second channel starting from a (T+1)^{th} time unit from execution of the transmission; transmitting third content on the second channel within first R time units from execution of the transmission; and transmitting fourth content on the second channel within a k^{th} time unit from execution of the transmission, and transmitting fifth content on the second channel within a (k+1)^{th} time unit from execution of the transmission, where the first content is at least part of information carried by the target object; the second content is at least part of the information carried by the target object; the third content is at least part of the information carried by the target object; the fourth content is a first transmission unit; the fifth content is an unsent transmission unit in the fourth content; and T, R, and k are all positive integers.

In a possible implementation, the first content includes SCI; and the SCI indicates at least one of the following: the first channel set and the first channel.

In a possible implementation, the first content includes SCI, the SCI carries a first indication, and the first indication is used to indicate at least one of the following: the first content is punctured; the first information transmission apparatus 60 sends the rate-matched target object within Q time units after the first T time units; and a terminal identity of the first information transmission apparatus 60, where Q is a positive integer.

In a possible implementation, the execution module 61 is further configured to perform at least one of the following: skipping sending the first content on a fifth channel; and determining, based on a result of LBT performed by the first information transmission apparatus 60, whether to perform a first operation on the target object within the first T time units, where the fifth channel is a channel on which channel access fails in the first channel set; and the first operation includes at least one of recoding and re-packetizing.

In a possible implementation, the second content includes SCI; and the SCI indicates at least one of the following: the second channel set, the second channel, an NDI, and a redundancy version.

In a possible implementation, the transmission module 62 is specifically configured to perform at least one of the following: transmitting the third content on the second channel within a pth time unit of the first R time units; and repeatedly transmitting the third content on the second channel within the first R time units, where p is a positive integer.

In a possible implementation, the third content includes at least one of the following: SCI and a second transmission unit; the SCI indicates at least one of the following: a COT corresponding to the second channel is sharable by other information transmission apparatuses than the first information transmission apparatus 60, and a duration of sharing the COT corresponding to the second channel; and the duration of sharing the COT corresponding to the second channel includes at least one of the following: a duration predefined by a protocol, a duration preconfigured by a network-side device, a duration configured by the network-side device, and a duration determined by the first information transmission apparatus 60.

In a possible implementation, the fifth content includes SCI; the SCI indicates at least one of the following: the second channel set, the second channel, an NDI, and a redundancy version; and the NDI is an NDI corresponding to the fifth content; and the NDI is not flipped relative to an NDI corresponding to the fourth content.

In a possible implementation, the execution module 61 and the transmission module 62 are further configured to perform at least one of the following:
the execution module 61 is further configured to continue to perform CCA in a case that the first information transmission apparatus 60 does not successfully perform LBT on all channels in the first channel set; the transmission module 62 is further configured to transmit the target object on the second channel starting from a target time unit; the transmission module 62 is further configured to transmit the target object on a candidate resource selected by a MAC layer; and in a case that the first information transmission apparatus 60 successfully performs LBT before a reserved aperiodic transmission resource, the transmission module 62 is further configured to transmit the target object on the aperiodic transmission resource, where the target time unit is a time unit within Y time units after LBT is successfully performed on all the channels in the first channel set, and Y is a positive integer.

In a possible implementation, in a case that LBT is successfully performed before the target time unit, the transmission module 62 is specifically configured to transmit the target object on the second channel starting from the target time unit.

In a possible implementation, in a case that LBT is successfully performed before the candidate resource selected by the MAC layer, the transmission module 62 is specifically configured to transmit the target object on the candidate resource selected by the MAC layer.

According to the information transmission apparatus provided in this embodiment of this application, because the first information transmission apparatus can directly perform channel access on the first channels in the first channel set, and transmit the target object on the second channel among the channels on which channel access is successful in the first channel set, a case that the first information transmission apparatus cannot perform channel access on a plurality of channels can be avoided. Therefore, a case that the first information transmission apparatus cannot perform a wideband transmission on the plurality of channels can be avoided, and a problem that when the first information transmission apparatus performs the channel access procedure on the plurality of channels, access to some channels fails can be resolved. Further, a case that the first information transmission apparatus cannot transmit a data packet with a large amount of information can be avoided. In this way, an information transmission capability can be improved.

The information transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The information transmission apparatus provided in this embodiment of this application can implement each process implemented in the method embodiments in FIG. 1 to FIG. 5, with the same technical effect achieved. To avoid repetition, details are not described herein again.

FIG. 8 is a schematic diagram of a possible structure of an information transmission apparatus according to an embodiment of this application. The information transmission apparatus is a second information transmission apparatus. As shown in FIG. 8, the second information transmission apparatus 70 includes a receiving module 71.

The receiving module 71 is configured to receive a target object from a first information transmission apparatus on a second channel in a second channel set, where the second channel set is a set of channels on which channel access is successful among the first channels in a first channel set.

In a possible implementation, the receiving module 71 is specifically configured to receive first content on the second channel, where the first content is transmitted by the first information transmission apparatus on the second channel within first T time units from execution of a transmission; the first content is at least part of information carried by the target object; and T is a positive integer.

In a possible implementation, the first content includes SCI, the SCI carries a first indication, and the first indication is used to indicate at least one of the following: the first content is punctured; the first information transmission apparatus sends the rate-matched target object within Q time units after the first T time units; and a terminal identity of the first information transmission apparatus, where Q is a positive integer.

In a possible implementation, the second information transmission apparatus 70 provided in this embodiment of this application may further include a determining module, where the determining module is configured to perform at least one of the following: determining, based on the first indication, whether the first content is complete content; determining, based on the first indication, whether the first content needs to be received; determining, based on the first indication, whether the second channel is occupied by the first information transmission apparatus within the Q time units after the first T time units by the first information transmission apparatus; and determining, based on the first indication, to continue to receive the first content from the first information transmission apparatus within the Q time units after the first T time units.

In a possible implementation, the determining module is further configured to skip feeding back a HARQ-ACK to the first information transmission apparatus in a case that it is determined that the first content is incomplete content.

In a possible implementation, the receiving module 71 is specifically configured to receive third content from the first information transmission apparatus on the second channel, where the third content is transmitted by the first information transmission apparatus on the second channel within first R time units from execution of a transmission; the third content is at least part of information carried by the target object; and R is a positive integer.

In a possible implementation, the third content includes at least one of the following: SCI and a second transmission unit; the SCI indicates at least one of the following: a COT corresponding to the second channel is sharable by other information transmission apparatuses than the first information transmission apparatus, and a duration of sharing the COT corresponding to the second channel; and the duration of sharing the COT corresponding to the second channel includes at least one of the following: a duration predefined by a protocol, a duration preconfigured by a network-side device, a duration configured by the network-side device, and a duration determined by the first information transmission apparatus.

In a possible implementation, the second information transmission apparatus 70 provided in this embodiment of this application may further include an execution module, where the execution module is configured to perform a second operation in a case that it is determined that the third content is not a complete transmission unit, where the second operation includes at least one of the following: receiving the third content after the duration of sharing the COT corresponding to the second channel; and performing type 2 channel access on the second channel based on information about sharing the COT corresponding to the second channel.

According to the information transmission apparatus provided in this embodiment of this application, because the second information transmission apparatus can directly receive the target object from the first information transmission apparatus on the second channel in the second channel set, a case that the second information transmission apparatus cannot perform a wideband transmission through a plurality of channels can be avoided, and a case that the second information transmission apparatus cannot receive a data packet with a large amount of information can be avoided. In this way, an information transmission capability can be improved.

The information transmission apparatus in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The information transmission apparatus provided in this embodiment of this application can implement each process implemented in the method embodiment in FIG. 6, with the same technical effect achieved. To avoid repetition, details are not described herein again.

Optionally, in an embodiment of this application, as shown in FIG. 9, an embodiment of this application further provides a communication device 80, including a processor 81 and a memory 82. The memory 82 stores a program or instructions capable of running on the processor 81. For example, when the communication device 80 is a terminal, and the program or instructions are executed by the processor 81, the steps of the foregoing embodiment of the information transmission method are implemented, with the same technical effect achieved. When the communication device 80 is a network-side device, and the program or instructions are executed by the processor 81, the steps of the foregoing embodiment of the information transmission method are implemented, with the same technical effect achieved. To avoid repetition, details are not described herein again.

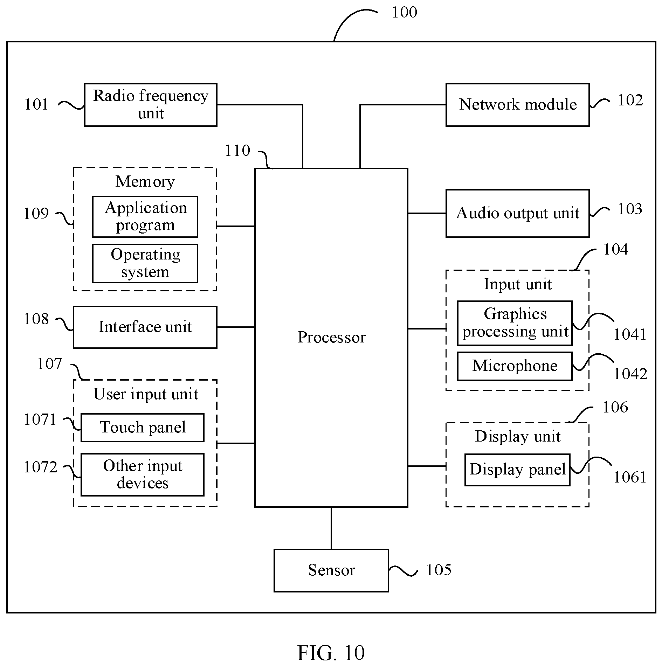

An embodiment of this application further provides a terminal, including a processor and a communication interface. The processor is configured to perform channel access on first channels in a first channel set. The communication interface is configured to transmit a target object on a second channel in a second channel set, where the second channel set is a set of channels on which channel access is successful among the first channels; or the communication interface is configured to receive a target object from a first terminal on a second channel in a second channel set, where the second channel set is a set of channels on which channel access is successful among the first channels in a first channel set. The terminal embodiment corresponds to the foregoing terminal-side method embodiment, and each implementation process and implementation of the foregoing method embodiment can be applied to the terminal embodiment, with the same technical effect achieved. Specifically, FIG. 10 is a schematic diagram of a hardware structure of a terminal for implementing an embodiment of this application.

The terminal 100 includes but is not limited to at least some components such as a radio frequency unit 101, a network module 102, an audio output unit 103, an input unit 104, a sensor 105, a display unit 106, a user input unit 107, an interface unit 108, a memory 109, and a processor 110.

A person skilled in the art may understand that the terminal 100 may further include a power supply (for example, a battery) supplying power to all components. Optionally, the power supply may be logically connected to the processor 110 through a power management system. In this way, functions such as charge management, discharge management, and power consumption management are implemented by using the power management system. The terminal structure shown in FIG. 10 does not constitute a limitation on the terminal. The terminal may include more or fewer components than those shown in the figure, or some components are combined, or component arrangements are different. Details are not described herein again.

It should be understood that, in this embodiment of this application, the input unit 104 may include a graphics processing unit (Graphics Processing Unit, GPU) 1041 and a microphone 1042. The graphics processing unit 1041 processes image data of a still picture or video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 101 may transmit the downlink data to the processor 110 for processing. In addition, the radio frequency unit 101 may send uplink data to the network-side device. Usually, the radio frequency unit 101 includes but is not limited to an antenna, an amplifier, a transceiver, a coupler, a low noise amplifier, a duplexer, and the like.

The memory 109 may be configured to store software programs or instructions and various data. The memory 109 may primarily include a first storage area for storing programs or instructions and a second storage area for storing data. The first storage area may store an operating system, an application program or instructions required by at least one function (such as an audio play function and an image play function), and the like. In addition, the memory 109 may include a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 109 in this embodiment of this application includes but is not limited to these and any other suitable types of memories.

The processor 110 may include one or more processing units. Optionally, the processor 110 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 110.

In one example, the processor 110 is configured to perform channel access on first channels in a first channel set.

The radio frequency unit 101 is configured to transmit a target object on a second channel in a second channel set, where
the second channel set is a set of channels on which channel access is successful among the first channels.

According to the terminal provided in this embodiment of this application, because the first terminal can directly perform channel access on the first channels in the first channel set, and transmit the target object on the second channel among the channels on which channel access is successful in the first channel set, a case that the first terminal cannot perform channel access on a plurality of channels can be avoided. Therefore, a case that the first terminal cannot perform a wideband transmission on the plurality of channels can be avoided, and a problem that when the first terminal performs the channel access procedure on the plurality of channels, access to some channels fails can be resolved. Further, a case that the first terminal cannot transmit a data packet with a large amount of information can be avoided. In this way, an information transmission capability can be improved.

In another example, the radio frequency unit 101 is configured to receive a target object from a first terminal on a second channel in a second channel set, where
the second channel set is a set of channels on which channel access is successful among the first channels in a first channel set.

According to the terminal provided in this embodiment of this application, because the second terminal can directly receive the target object from the first terminal on the second channel in the second channel set, a case that the second terminal cannot perform a wideband transmission through a plurality of channels can be avoided, and a case that the second terminal cannot receive a data packet with a large amount of information can be avoided. In this way, an information transmission capability can be improved.

An embodiment of this application further provides a readable storage medium. The readable storage medium stores a program or instructions. When the program or instructions are executed by a processor, each process of the foregoing embodiment of the information transmission method is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the embodiment of the information transmission method, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the information transmission method, with the same technical effect achieved. To avoid repetition, details are not described herein again.

An embodiment of this application further provides an information transmission system, including a first terminal and a second terminal. The first terminal may be configured to perform the steps of the foregoing information transmission method. The second terminal may be configured to perform the steps of the foregoing information transmission method.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. An information transmission method, comprising:
performing, by a first terminal, channel access on first channels in a first channel set; and
transmitting, by the first terminal, a target object on a second channel in a second channel set, wherein
the second channel set is a set of channels on which channel access is successful among the first channels.

2. The method according to claim 1, wherein the performing, by the first terminal, the channel access on thefirst channels in the first channel set comprises:
performing, by the first terminal, detection on the first channels in M time units at a target time, wherein
the target time comprises at least one of the following: an idle time, a time before a transmission start time, and a time before a frame boundary, wherein M is a positive integer.

3. The method according to claim 2, wherein start positions of the M time units corresponding to the first channels are the same as start positions of M time units corresponding to other first channels; and/or
end positions of the M time units corresponding to the first channels are the same as end positions of M time units corresponding to other first channels.

4. The method according to claim 2, wherein start positions of the M time units corresponding to the first channels are different from start positions of M time units corresponding to other first channels; and/or
end positions of the M time units corresponding to the first channels are different from end positions of M time units corresponding to other first channels.

5. The method according to claim 3 or 4, wherein a target position meets at least one of the following: it is randomly selected by the first terminal; it is predefined by a protocol; it is preconfigured by a network-side device; and it is configured by the network-side device, wherein
the target position comprises at least one of the following: start positions of M time units corresponding to each channel in the first channel set and end positions of the M time units corresponding to each channel in the first channel set.

6. The method according to claim 1, wherein a third channel in a third channel set has a shared channel occupancy time COT, and the first terminal is capable of sharing the COT; and
the performing, by the first terminal, the channel access on thefirst channels in the first channel set comprises:
performing, by the first terminal, type 2 channel access on the third channel, wherein
the third channel set is a subset or a universal set of the first channel set.

7. The method according to claim 6, wherein the third channel is a channel other than a primary channel in the third channel set.

8. The method according to claim 1, wherein the performing, by the first terminal, the channel access on the first channels in the first channel set comprises:
performing, by the first terminal, type 1 channel access on each channel in the first channel set.

9. The method according to claim 8, wherein the method further comprises:
adjusting, by the first terminal based on first information, a contention window size CWp value corresponding to a fourth channel, wherein
the fourth channel is at least part of channels in the first channel set; and
the first information comprises at least one of the following: hybrid automatic repeat request HARQ statistical value information in first i transmissions of the fourth channel and HARQ statistical value information in a j^{th} time unit in the first i transmissions of the fourth channel, wherein i and j are both positive integers.

10. The method according to claim 9, wherein the adjusting, by the first terminal based on the first information, the CWp value corresponding to the fourth channel comprises at least one of the following:
in a case that a proportion of HARQ-negative acknowledgement NACK information in the HARQ statistical value information is greater than or equal to a first proportion, increasing, by the first terminal, the CWp value corresponding to the fourth channel; and
in a case that a proportion of HARQ-acknowledgement ACK information in the HARQ statistical value information is greater than or equal to a second proportion, decreasing, by the first terminal, the CWp value corresponding to the fourth channel.

11. The method according to claim 1, wherein a counter value corresponding to each channel in the first channel set is the same.

12. The method according to claim 1, wherein a counter value corresponding to each channel in the first channel set is different.

13. The method according to claim 11 or 12, wherein the counter value corresponding to each channel in the first channel set is determined by a counter value corresponding to a predetermined channel in the first channel set;
the predetermined channel comprises at least one of the following: a channel with a largest CWp value, a channel with a smallest CWp value, and a specific channel; and
the specific channel comprises at least one of the following: a channel predefined by a protocol, a channel configured by a network-side device, a channel preconfigured by the network-side device, and a channel selected by the first terminal.

14. The method according to claim 1, wherein the performing, by the first terminal, the channel access on the first channels in the first channel set comprises at least one of the following:
performing, by the first terminal, type 1 channel access on a primary channel in the first channel set; and
performing, by the first terminal, type 2 channel access on a secondary channel in the first channel set, wherein
the secondary channel is a channel other than the primary channel.

15. The method according to claim 14, wherein the primary channel meets at least one of the following:
it is randomly selected by the first terminal; distribution of primary channels selected by the first terminal is uniform; it is determined by the first terminal based on a channel transmission parameter; and a frequency of selecting the first channel is less than or equal to a specific frequency.

16. The method according to claim 14, wherein the performing, by the first terminal, the type 2 channel access on the secondary channel in the first channel set comprises:
performing, by the first terminal, detection on the secondary channel in X time units, wherein X is a positive integer.

17. The method according to claim 14, wherein the performing, by the first terminal, the type 2 channel access on the secondary channel in the first channel set comprises:
in a case that a result of detection on the secondary channel in X time units is a specific result, transmitting, by the first terminal, the target object on the secondary channel.

18. The method according to claim 14, wherein a CWp value corresponding to each channel in the first channel set is the same.

19. The method according to claim 1, wherein the transmitting, by the first terminal, the target object on the second channel in the second channel set comprises at least one of the following:
transmitting, by the first terminal, first content on the second channel within first T time units from execution of the transmission;
transmitting, by the first terminal, second content on the second channel starting from a (T+1)^{th} time unit from execution of the transmission;
transmitting, by the first terminal, third content on the second channel within first R time units from execution of the transmission; and
transmitting, by the first terminal, fourth content on the second channel within a k^{th} time unit from execution of the transmission, and transmitting fifth content on the second channel within a (k+1)^{th} time unit from execution of the transmission, wherein
the first content is at least part of information carried by the target object; the second content is at least part of the information carried by the target object; the third content is at least part of the information carried by the target object; the fourth content is a first transmission unit; the fifth content is an unsent transmission unit in the fourth content; and T, R, and k are all positive integers.

20. The method according to claim 19, wherein the first content comprises sidelink control information SCI; and
the SCI indicates at least one of the following: the first channel set and the first channel.

21. The method according to claim 19, wherein the first content comprises SCI, the SCI carries a first indication, and the first indication is used to indicate at least one of the following:
the first content is punctured;
the first terminal sends the rate-matched target object within Q time units after the first T time units; and
a terminal identity of the first terminal, wherein
Q is a positive integer.

22. The method according to claim 19, wherein the method further comprises at least one of the following:
skipping sending, by the first terminal, the first content on a fifth channel; and
determining, by the first terminal based on a result of listen before talk LBT performed by the first terminal, whether to perform a first operation on the target object within the first T time units, wherein
the fifth channel is a channel on which channel access fails in the first channel set; and the first operation comprises at least one of recoding and re-packetizing.

23. The method according to claim 19, wherein the second content comprises SCI; and
the SCI indicates at least one of the following: the second channel set, the second channel, a new data indicator NDI, and a redundancy version.

24. The method according to claim 19, wherein the transmitting, by the first terminal, the third content on the second channel within the first R time units from execution of the transmission comprises at least one of the following:
transmitting, by the first terminal, the third content on the second channel within a p^{th} time unit of the first R time units; and
repeatedly transmitting, by the first terminal, the third content on the second channel within the first R time units, wherein
p is a positive integer.

25. The method according to claim 19, wherein the third content comprises at least one of the following: SCI and a second transmission unit;
the SCI indicates at least one of the following: a COT corresponding to the second channel is sharable by other terminals than the first terminal, and a duration of sharing the COT corresponding to the second channel; and
the duration of sharing the COT corresponding to the second channel comprises at least one of the following: a duration predefined by a protocol, a duration preconfigured by a network-side device, a duration configured by the network-side device, and a duration determined by the first terminal.

26. The method according to claim 19, wherein the fifth content comprises SCI;
the SCI indicates at least one of the following: the second channel set, the second channel, an NDI, and a redundancy version; and
the NDI is an NDI corresponding to the fifth content; and the NDI is not flipped relative to an NDI corresponding to the fourth content.

27. The method according to claim 1, wherein the method further comprises at least one of the following:
in a case that the first terminal does not successfully perform LBT on all channels in the first channel set, continuing, by the first terminal, to perform clear channel assessment CCA;
transmitting, by the first terminal, the target object on the second channel starting from a target time unit;
transmitting, by the first terminal, the target object on a candidate resource selected by a media access control MAC layer; and
in a case that the first terminal successfully performs LBT before a reserved aperiodic transmission resource, transmitting, by the first terminal, the target object on the aperiodic transmission resource, wherein
the target time unit is a time unit within Y time units after LBT is successfully performed on all the channels in the first channel set, and Y is a positive integer.

28. The method according to claim 27, wherein the transmitting, by the first terminal, the target object on the second channel starting from the target time unit comprises:
in a case that the first terminal successfully performs LBT before the target time unit, transmitting, by the first terminal, the target object on the second channel starting from the target time unit.

29. The method according to claim 27, wherein the transmitting, by the first terminal, the target object on the candidate resource selected by the media access control MAC layer comprises:
in a case that the first terminal successfully performs LBT before the candidate resource selected by the MAC layer, transmitting, by the first terminal, the target object on the candidate resource selected by the MAC layer.

30. An information transmission method, comprising:
receiving, by a second terminal, a target object from a first terminal on a second channel in a second channel set, wherein
the second channel set is a set of channels on which channel access is successful in a first channel set.

31. The method according to claim 30, wherein the receiving, by the second terminal, the target object from the first terminal on the second channel in the second channel set comprises:
receiving, by the second terminal, first content on the second channel, wherein
the first content is transmitted by the first terminal on the second channel within first T time units from execution of a transmission; the first content is at least part of information carried by the target object; and T is a positive integer.

32. The method according to claim 31, wherein the first content comprises SCI, the SCI carries a first indication, and the first indication is used to indicate at least one of the following:
the first content is punctured;
the first terminal sends the rate-matched target object within Q time units after the first T time units; and
a terminal identity of the first terminal, wherein
Q is a positive integer.

33. The method according to claim 32, wherein the method further comprises at least one of the following:
determining, by the second terminal based on the first indication, whether the first content is complete content;
determining, by the second terminal based on the first indication, whether the first content needs to be received;
determining, by the second terminal based on the first indication, whether the second channel is occupied by the first terminal within the Q time units after the first T time units; and
determining, by the second terminal based on the first indication, to continue to receive the first content within the Q time units after the first T time units.

34. The method according to claim 33, wherein after the determining, by the second terminal based on the first indication, whether the first content is complete content, the method further comprises:
in a case that the second terminal determines that the first content is incomplete content, skipping feeding back, by the second terminal, a HARQ-ACK to the first terminal.

35. The method according to claim 30, wherein the receiving, by the second terminal, the target object from the first terminal on the second channel in the second channel set comprises:
receiving, by the second terminal, third content from the first terminal on the second channel, wherein
the third content is transmitted by the first terminal on the second channel within first R time units from execution of a transmission; the third content is at least part of information carried by the target object; and R is a positive integer.

36. The method according to claim 35, wherein the third content comprises at least one of the following: SCI and a second transmission unit;
the SCI indicates at least one of the following: a COT corresponding to the second channel is sharable by other terminals than the first terminal, and a duration of sharing the COT corresponding to the second channel; and
the duration of sharing the COT corresponding to the second channel comprises at least one of the following: a duration predefined by a protocol, a duration preconfigured by a network-side device, a duration configured by the network-side device, and a duration determined by the first terminal.

37. The method according to claim 36, wherein the method further comprises:
in a case that the second terminal determines that the third content is not a complete transmission unit, performing, by the second terminal, a second operation, wherein
the second operation comprises at least one of the following:
receiving the third content after the duration of sharing the COT corresponding to the second channel; and
performing type 2 channel access on the second channel based on information about sharing the COT corresponding to the second channel.

38. An information transmission apparatus, wherein the information transmission apparatus is a first information transmission apparatus, and the first information transmission apparatus comprises an execution module and a transmission module, wherein
the execution module is configured to perform channel access on first channels in a first channel set; and
the transmission module is configured to transmit a target object on a second channel in a second channel set, wherein
the second channel set is a set of channels on which channel access is successful among the first channels.

39. The information transmission apparatus according to claim 38, wherein the execution module is specifically configured to perform detection on the first channels in M time units at a target time, wherein
the target time comprises at least one of the following: an idle time, a time before a transmission start time, and a time before a frame boundary, wherein M is a positive integer.

40. The information transmission apparatus according to claim 39, wherein start positions of the M time units corresponding to the first channels are the same as start positions of M time units corresponding to other first channels; and/or
end positions of the M time units corresponding to the first channels are the same as end positions of M time units corresponding to other first channels.

41. The information transmission apparatus according to claim 39, wherein start positions of the M time units corresponding to the first channels are different from start positions of M time units corresponding to other first channels; and/or
end positions of the M time units corresponding to the first channels are different from end positions of M time units corresponding to other first channels.

42. The information transmission apparatus according to claim 40 or 41, wherein a target position meets at least one of the following: it is randomly selected by the first information transmission apparatus; it is predefined by a protocol; it is preconfigured by a network-side device; and it is configured by the network-side device, wherein
the target position comprises at least one of the following: start positions of M time units corresponding to each channel in the first channel set and end positions of the M time units corresponding to each channel in the first channel set.

43. The information transmission apparatus according to claim 38, wherein a third channel in a third channel set has a shared COT, and the first information transmission apparatus is capable of sharing the COT; and
the execution module is specifically configured to perform type 2 channel access on the third channel in the third channel set, wherein
the third channel set is a subset or a universal set of the first channel set.

44. The information transmission apparatus according to claim 43, wherein the third channel is a channel other than a primary channel in the third channel set.

45. The information transmission apparatus according to claim 38, wherein the execution module is specifically configured to perform type 1 channel access on each channel in the first channel set.

46. The information transmission apparatus according to claim 45, wherein the first information transmission apparatus further comprises an adjustment module, wherein
the adjustment module is configured to adjust, based on first information, a CWp value corresponding to a fourth channel, wherein
the fourth channel is at least part of channels in the first channel set; and
the first information comprises at least one of the following: HARQ statistical value information in first i transmissions of the fourth channel and HARQ statistical value information in a j^{th} time unit in the first i transmissions of the fourth channel, wherein i and j are both positive integers.

47. The information transmission apparatus according to claim 46, wherein the adjustment module is specifically configured to perform at least one of the following:
in a case that a proportion of HARQ-NACK information in the HARQ statistical value information is greater than or equal to a first proportion, increasing the CWp value corresponding to the fourth channel; or
in a case that a proportion of HARQ-ACK information in the HARQ statistical value information is greater than or equal to a second proportion, decreasing the CWp value corresponding to the fourth channel.

48. The information transmission apparatus according to claim 38, wherein a counter value corresponding to each channel in the first channel set is the same.

49. The information transmission apparatus according to claim 38, wherein a counter value corresponding to each channel in the first channel set is different.

50. The information transmission apparatus according to claim 48 or 49, wherein the counter value corresponding to each channel in the first channel set is determined by a counter value corresponding to a predetermined channel in the first channel set;
the predetermined channel comprises at least one of the following: a channel with a largest CWp value, a channel with a smallest CWp value, and a specific channel; and
the specific channel comprises at least one of the following: a channel predefined by a protocol, a channel configured by a network-side device, a channel preconfigured by the network-side device, and a channel selected by the first information transmission apparatus.

51. The information transmission apparatus according to claim 38, wherein the execution module is specifically configured to perform at least one of the following:
performing type 1 channel access on a primary channel in the first channel set; and
performing type 2 channel access on a secondary channel in the first channel set, wherein
the secondary channel is a channel other than the primary channel.

52. The information transmission apparatus according to claim 51, wherein the primary channel meets at least one of the following:
it is randomly selected by the first information transmission apparatus; distribution of primary channels selected by the first information transmission apparatus is uniform; it is determined by the first information transmission apparatus based on a channel transmission parameter; and a frequency of selecting the first channel is less than or equal to a specific frequency.

53. The information transmission apparatus according to claim 51, wherein the execution module is specifically configured to perform detection on the secondary channel in X time units, wherein X is a positive integer.

54. The information transmission apparatus according to claim 51, wherein the execution module is specifically configured to transmit the target object on the secondary channel in a case that a result of detection on the secondary channel in X time units is a specific result.

55. The information transmission apparatus according to claim 51, wherein a CWp value corresponding to each channel in the first channel set is the same.

56. The information transmission apparatus according to claim 38, wherein the transmission module is specifically configured to perform at least one of the following:
transmitting first content on the second channel within first T time units from execution of the transmission;
transmitting second content on the second channel starting from a (T+1)^{th} time unit from execution of the transmission;
transmitting third content on the second channel within first R time units from execution of the transmission; and
transmitting fourth content on the second channel within a k^{th} time unit from execution of the transmission, and transmitting fifth content on the second channel within a (k+1)^{th} time unit from execution of the transmission, wherein
the first content is at least part of information carried by the target object; the second content is at least part of the information carried by the target object; the third content is at least part of the information carried by the target object; the fourth content is a first transmission unit; the fifth content is an unsent transmission unit in the fourth content; and T, R, and k are all positive integers.

57. The information transmission apparatus according to claim 56, wherein the first content comprises SCI; and
the SCI indicates at least one of the following: the first channel set and the first channel.

58. The information transmission apparatus according to claim 56, wherein the first content comprises SCI, the SCI carries a first indication, and the first indication is used to indicate at least one of the following:
the first content is punctured;
the first information transmission apparatus sends the rate-matched target object within Q time units after the first T time units; and
a terminal identity of the first information transmission apparatus, wherein
Q is a positive integer.

59. The information transmission apparatus according to claim 56, wherein the execution module is further configured to perform at least one of the following:
skipping sending the first content on a fifth channel; and
determining, based on a result of LBT performed by the first information transmission apparatus, whether to perform a first operation on the target object within the first T time units, wherein
the fifth channel is a channel on which channel access fails in the first channel set; and the first operation comprises at least one of recoding and re-packetizing.

60. The information transmission apparatus according to claim 56, wherein the second content comprises SCI; and
the SCI indicates at least one of the following: the second channel set, the second channel, an NDI, and a redundancy version.

61. The information transmission apparatus according to claim 56, wherein the transmission module is specifically configured to perform at least one of the following:
transmitting the third content on the second channel within a p^{th} time unit of the first R time units; and
repeatedly transmitting the third content on the second channel within the first R time units, wherein
p is a positive integer.

62. The information transmission apparatus according to claim 56, wherein the third content comprises at least one of the following: SCI and a second transmission unit;
the SCI indicates at least one of the following: a COT corresponding to the second channel is sharable by other information transmission apparatuses than the first information transmission apparatus, and a duration of sharing the COT corresponding to the second channel; and
the duration of sharing the COT corresponding to the second channel comprises at least one of the following: a duration predefined by a protocol, a duration preconfigured by a network-side device, a duration configured by the network-side device, and a duration determined by the first information transmission apparatus.

63. The information transmission apparatus according to claim 56, wherein the fifth content comprises SCI;
the SCI indicates at least one of the following: the second channel set, the second channel, an NDI, and a redundancy version; and
the NDI is an NDI corresponding to the fifth content; and the NDI is not flipped relative to an NDI corresponding to the fourth content.

64. The information transmission apparatus according to claim 38, wherein the execution module and the transmission module are further configured to perform at least one of the following:
the execution module is further configured to continue to perform CCA in a case that the first information transmission apparatus does not successfully perform LBT on all channels in the first channel set;
the transmission module is further configured to transmit the target object on the second channel starting from a target time unit;
the transmission module is further configured to transmit the target object on a candidate resource selected by a MAC layer; and
in a case that the first information transmission apparatus successfully performs LBT before a reserved aperiodic transmission resource, the transmission module is further configured to transmit the target object on the aperiodic transmission resource, wherein
the target time unit is a time unit within Y time units after LBT is successfully performed on all the channels in the first channel set, and Y is a positive integer.

65. The information transmission apparatus according to claim 64, wherein in a case that LBT is successfully performed before the target time unit, the transmission module is specifically configured to transmit the target object on the second channel starting from the target time unit.

66. The information transmission apparatus according to claim 64, wherein in a case that LBT is successfully performed before the candidate resource selected by the MAC layer, the transmission module is specifically configured to transmit the target object on the candidate resource selected by the MAC layer.

67. An information transmission apparatus, wherein the information transmission apparatus is a second information transmission apparatus, and the second information transmission apparatus comprises a receiving module, wherein
the receiving module is configured to receive a target object from a first information transmission apparatus on a second channel in a second channel set, wherein
the second channel set is a set of channels on which channel access is successful among the first channels in a first channel set.

68. The information transmission apparatus according to claim 67, wherein the receiving module is specifically configured to receive first content on the second channel, wherein
the first content is transmitted by the first information transmission apparatus on the second channel within first T time units from execution of a transmission; the first content is at least part of information carried by the target object; and T is a positive integer.

69. The information transmission apparatus according to claim 68, wherein the first content comprises SCI, the SCI carries a first indication, and the first indication is used to indicate at least one of the following:
the first content is punctured;
the first information transmission apparatus sends the rate-matched target object within Q time units after the first T time units; and
a terminal identity of the first information transmission apparatus, wherein
Q is a positive integer.

70. The information transmission apparatus according to claim 69, wherein the second information transmission apparatus further comprises a determining module, wherein
the determining module is configured to perform at least one of the following:
determining, based on the first indication, whether the first content is complete content;
determining, based on the first indication, whether the first content needs to be received;
determining, based on the first indication, whether the second channel is occupied by the first information transmission apparatus within the Q time units after the first T time units by the first information transmission apparatus; and
determining, based on the first indication, to continue to receive the first content from the first information transmission apparatus within the Q time units after the first T time units.

71. The information transmission apparatus according to claim 70, wherein the determining module is further configured to skip feeding back a HARQ-ACK to the first information transmission apparatus in a case that it is determined that the first content is incomplete content.

72. The information transmission apparatus according to claim 67, wherein the receiving module is specifically configured to receive third content from the first information transmission apparatus on the second channel, wherein
the third content is transmitted by the first information transmission apparatus on the second channel within first R time units from execution of a transmission; the third content is at least part of information carried by the target object; and R is a positive integer.

73. The information transmission apparatus according to claim 72, wherein the third content comprises at least one of the following: SCI and a second transmission unit;
the SCI indicates at least one of the following: a COT corresponding to the second channel is sharable by other information transmission apparatuses than the first information transmission apparatus, and a duration of sharing the COT corresponding to the second channel; and
the duration of sharing the COT corresponding to the second channel comprises at least one of the following: a duration predefined by a protocol, a duration preconfigured by a network-side device, a duration configured by the network-side device, and a duration determined by the first information transmission apparatus.

74. The information transmission apparatus according to claim 73, wherein the second information transmission apparatus further comprises an execution module, wherein
the execution module is configured to perform a second operation in a case that it is determined that the third content is not a complete transmission unit, wherein
the second operation comprises at least one of the following:
receiving the third content after the duration of sharing the COT corresponding to the second channel; and
performing type 2 channel access on the second channel based on information about sharing the COT corresponding to the second channel.

75. A terminal, comprising a processor and a memory, wherein the memory stores a program or instructions capable of running on the processor, and when the program or instructions are executed by the processor, the steps of the information transmission method according to any one of claims 1 to 37 are implemented.

76. A readable storage medium, wherein the readable storage medium stores a program or instructions, and when the program or instructions are executed by a processor, the steps of the information transmission method according to any one of claims 1 to 37 are implemented.
